(19) Europäisches Patentamt
European Patent Office
Office européen des brevets

(11) **EP 2 319 153 B1**

(12) **EUROPÄISCHE PATENTSCHRIFT**

(45) Veröffentlichungstag und Bekanntmachung des Hinweises auf die Patenterteilung:
**18.10.2017  Patentblatt 2017/42**

(21) Anmeldenummer: **09776085.4**

(22) Anmeldetag: **08.08.2009**

(51) Int Cl.:
**H02J 3/14** *(2006.01)*        **H02J 1/14** *(2006.01)*

(86) Internationale Anmeldenummer:
**PCT/DE2009/001138**

(87) Internationale Veröffentlichungsnummer:
**WO 2010/020219 (25.02.2010 Gazette 2010/08)**

(54) **VERFAHREN UND VORRICHTUNG ZUM OPTIMIERTEN ENERGIEMANAGEMENT**

METHOD AND DEVICE FOR OPTIMIZED ENERGY MANAGEMENT

PROCÉDÉ ET DISPOSITIF POUR OPTIMISER LA GESTION DE L'ÉNERGIE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **22.08.2008  DE 102008039334**

(43) Veröffentlichungstag der Anmeldung:
**11.05.2011  Patentblatt 2011/19**

(73) Patentinhaber: **Airbus Defence and Space GmbH 85521 Ottobrunn (DE)**

(72) Erfinder: **LENTNER, Konrad 85375 Mintraching (DE)**

(74) Vertreter: **Isarpatent Patent- und Rechtsanwälte Behnisch Barth Charles Hassa Peckmann & Partner mbB Postfach 44 01 51 80750 München (DE)**

(56) Entgegenhaltungen:
EP-A1- 1 657 796      DE-A1- 3 536 098
DE-A1- 19 842 429     US-A- 5 600 575

**Beschreibung**

Die Erfindung betrifft das Gebiet des Energiemanagements elektrischer Systeme. Insbesondere betrifft die Erfindung ein Verfahren zum optimierten Energiemanagement eines elektrischen Systems, wobei das Energiemanagement zum Schutz einer zu schützenden Komponente des elektrischen Systems dient.

Bekanntermaßen entsteht beim Betrieb elektrischer Maschinen und anderer Verbraucher, zu denen definitionsgemäß auch beispielsweise elektrische Leitungen zählen, ein Energieverlust. Diese so genannte Verlustleistung $P_{Diss}$ wird in Wärme umgesetzt und führt zu einer zumeist unerwünschten Erhöhung der Temperatur T der jeweiligen Komponente.

Je nach Wirkungsgrad des jeweiligen Verbrauchers, der sich bei Kenntnis der Eingangsleistung $P_{Ein}$ und der Ausgangsleistung $P_{Aus}$ durch die bekannte Formel

$$\eta = P_{Ein}/P_{Aus} \qquad\qquad\qquad\qquad \text{(Gl. 1)}$$

berechnen lässt, fällt bei sinkendem Wirkungsgrad $\eta$ der in Wärme umgesetzte Anteil der Eingangsleistung $P_{Ein}$ größer aus, und eine geringere Ausgangsleistung bleibt übrig.

Elektrotechnische Systeme bestehen zumeist aus einer Mehrzahl von elektrischen Verbrauchern. Die die elektrische Leitung zur Verfügung stellende Energiequelle (Generator) ist dabei im Normalfall aus ökonomischen Erwägungen heraus für eine mittlere Entnahmeleistung konzipiert, wobei unter Umständen auch kurzzeitige Leistungsspitzen bereitgestellt werden können, wohingegen länger andauernde Leistungsüberschreitungen zu einer unzulässig hohen Erwärmung des Generators und somit schlimmstenfalls seiner Zerstörung führen können. Darüber hinaus gilt diese Problematik nicht nur für den Generator selber, sondern auch die von ihm zu den einzelnen Verbrauchern führenden elektrischen Leitungen können bei länger andauernder Überlastung unzulässig erwärmt werden, da auch die Leitungen unter den gleichen Gesichtspunkten dimensioniert werden. Kurze Leistungsspitzen hingegen können aufgrund der zeitverzögert ablaufenden Erwärmung zumeist problemlos übertragen werden.

Um die unzulässige Erwärmung der beschriebenen elektrischen Komponenten zu vermeiden, müssen Maßnahmen ergriffen werden, die im Falle einer Leistungsspitze dieselbe in ihrem zeitlichen Rahmen begrenzen. Hierzu sind die entsprechenden die Leistung abfordernden Verbraucher (z.B. elektrische Maschinen, Heizungen) priorisiert. Im Falle des Auftretens einer Leistungsspitze wird zunächst der Verbraucher mit der niedrigsten Priorität vom Generator getrennt, so dass die abgeforderte Gesamtleistung sinkt. Sollte diese immer noch zu hoch sein, wird der Verbraucher mit der nächsthöheren Priorität getrennt, usw. Sobald die Gesamtleistung nicht nur unter den zulässigen Höchstwert abgesunken ist, sondern wieder ausreichend Kapazität für den zuletzt abgetrennten Verbraucher zur Verfügung steht, wird dieser wieder zugeschaltet, usw.

Die Aufgabe des Ab- und Zuschaltens der priorisierten Verbraucher wird dabei von automatischen so genannten Power- oder Energiemanagementsystemen übernommen. Diese Systeme bilden den logischen zeitlichen Ablauf ab, beispielsweise in Form von (endlichen) Zustandsautomaten. Solche Zustandsautomaten, auch Zustandsmaschinen genannt, werden unter anderem in der Entwicklung digitaler Schaltungen und der Modellierung ihres Applikationsverhaltens wie z.B. bei Steuerungen verwendet. Zustandsautomaten gehen von diskreten Zuständen aus und können regelbasierte Ausgangszustände herbeiführen, wenn an ihrem Eingang bzw. ihren Eingängen die entsprechenden Eingangsinformationen anliegen und die Regeln in Form von z.B. logischen Tabellen hinterlegt sind.

Energiemanagementsysteme sind aus dem jüngeren Stand der Technik insbesondere in Verbindung mit Kraftfahrzeugen bekannt. So offenbart die DE 103 41 904 B4 ein System, welches die in einem Kfz zur Verfügung stehende Energie mit der von den unterschiedlichen Verbrauchern angeforderten vergleicht. Regelbasiert werden dabei zunächst die nicht sicherheitsrelevanten Komponenten abgeschaltet oder nur verzögert oder gedrosselt mit Energie versorgt. Für den Fall weiterhin ungenügender Energie stellt das Energiemanagementsystem auf ein Notprogramm um.

Ein anderes Beispiel für ein Energiemanagementsystem zeigt die DE 10058404 A1. Hier ist das System bevorzugt in einen ersten Verbraucher integriert, an dem ein zweiter Verbraucher angeschlossen werden kann. Wird der zweite Verbraucher eingeschaltet und übersteigt die Leistungssumme beider Verbraucher einen zulässigen Wert, so wird der erste Verbraucher soweit heruntergeregelt oder so lange abgeschaltet, bis der zweite Verbraucher seine Leistungsanforderung zurücknimmt. Hierzu umfasst die Erfindung bevorzugt einen Shuntwiderstand, der als Stromsensor eingesetzt wird, sowie entsprechende elektrische Drosselschaltungen.

DE 19842429 A1 zeigt ein Energiemanagmentsystem mit Mittels zum Vergleich der Temperaturerhöhung eines zu schützende Komponente mit einem vergegebenen Temperaturschwellwert und Mittels zur Trennung eines Verbranchers in Abhängigkeit seines Priorität wenn der Temperaturschwellwert überschritten wird.

Die Verwendung von Zustandsautomaten in Verbindung mit dem Energiemanagement elektrischer Systeme hat jedoch mehrere Nachteile. So ist der Entwurf der zum Betrieb notwendigen Regelsysteme, beispielsweise in Form von Logiktabellen, aufwändig. Dies gilt umso mehr, wenn eine größere Anzahl von Verbrauchern im System vorhanden ist, oder wenn eine Vorhersage des Verhaltens von Verbrauchern schwierig ist, beispielsweise weil diese eine ganze Bandbreite an Leistungsaufnahmen aufweisen können. Außerdem bieten Zustandsautomaten nur diskrete Schaltzustände an. Für den Fall, dass zwischen zwei diskreten Schaltzuständen liegende Zustände gewünscht sein sollen, muss der Zustandsautomat diese Zustände entsprechend "simulieren", was ihn entsprechend komplexer macht. Ein weiterer, wesentlicher Nachteil besteht jedoch darin, dass derartige Systeme bei häufig schaltenden Leistungsabnehmern entsprechend häufig selber aktiv werden, also priorisierte Verbraucher in kurzem zeitlichen Abstand ab- und wieder zuschalten. Diese häufigen Schaltvorgänge sind durch den diskreten Charakter der Zustandsautomaten bedingt. Das zu häufige Aktivwerden des Energiemanagementsystems hat wiederum Nachteile auf die angeschlossenen und ggf. von diesem abgeschalteten Verbraucher. Zudem erfolgt das Abschalten der Verbraucher unter Umständen insofern verfrüht und somit unnötig, dass der Auslöser, nämlich das Überschreiten der Leistungsabforderungsgrenze, noch zu keinen Problemen hinsichtlich einer Temperaturüberschreitung geführt hat. Auch kann das System aus Generator, Verbrauchern und Energiemanagementsystem in einen unerwünschten Zustand gelangen, der zu einem selbstbeeinflussenden oder gar -verstärkenden Wechsel der Schaltvorgänge führt: Bei einem Nicht-Tätigwerden des Energiemanagementsystems würde es auch weiterhin nicht tätig sein müssen, da es aber (möglicherweise unnötig) tätig wurde, muss es immer wieder tätig werden. In diesem Zusammenhang treten Grenzzyklen auf, die kurzfristig zu einer Beeinträchtigung im flüssigen Betrieb des elektrischen Systems, und langfristig möglicherweise zu einer Schädigung der Komponenten desselben führen können. Schließlich erfassen die bekannten Systeme die Leistung, lassen also nur indirekt einen Rückschluss auf den eigentlichen kritischen Parameter, nämlich die Temperatur, zu.

Die Aufgabe der Erfindung ist demnach, ein Verfahren und eine Vorrichtung bereitzustellen, welches die Nachteile des Standes der Technik überwindet. Insbesondere soll der jeweilige, an das konkrete Gesamtsystem angepasste Entwurf einfacher sein, als der Entwurf der im Stand der Technik benutzten Zustandsautomaten ist. Ferner soll die Erfindung auf kurzzeitige Überschreitungen der Leistungsobergrenze nur dann mit einem Abschalten der priorisierten Verbraucher reagieren, wenn auch tatsächlich mit einer unzulässigen Temperaturerhöhung zu rechnen ist. Auch soll das Verfahren selbststabilisierend sein, so dass das Auftreten von Grenzzyklen vermieden wird. Schließlich soll die Temperatur der zu schützenden Komponente möglichst genau begrenzt werden können.

Die Aufgabe wird durch die Merkmale des erfindungsgemäßen Verfahrens nach Anspruch 1 sowie die Merkmale der erfindungsgemäßen Vorrichtung gemäß Anspruch 9 gelöst.

Weitere bevorzugte Ausführungsformen sind den abhängigen Ansprüchen sowie der nachfolgenden detaillierten Beschreibung und den Figuren zu entnehmen.

Die entsprechenden Einrichtungen werden im Folgenden detailliert erläutert.

Erfindungsgemäß wird ein Verfahren zum optimierten Energiemanagement eines elektrischen Systems vorgeschlagen. Als elektrisches System kommen jegliche Systeme in Frage, welche elektrische Komponenten wie Energiequellen, Verbraucher usw. umfassen. Insbesondere umfasst ein derartiges elektrisches System mindestens eine zu schützende Komponente, zu deren Schutz das erfindungsgemäße Verfahren insbesondere gedacht ist. Häufig ist die zu schützende Komponente eine elektrische Leitung, die bei Überbelastung thermischen Schaden nehmen kann.

In einem ersten erfindungsgemäßen Schritt wird zunächst die Verlustleistung $P_{Diss}$ mindestens einer zu schützenden Komponente des elektrischen Systems bestimmt. Dies kann auf verschiedene Arten geschehen, worauf noch detailliert eingegangen wird.

Anschließend wird die bestimmte (gemessene) Verlustleistung $P_{Diss}$ in ein thermisches Modell der jeweiligen Komponente eingegeben.

Schließlich erfolgt eine Berechnung der zu erwartenden Temperaturerhöhung $\Delta T$ der jeweiligen Komponente mit Hilfe des thermischen Modells. Dabei kann das Modell auch den zeitlichen Verlauf $\Delta T(t)$ berechnen, so dass nicht nur die Gleichgewichtstemperatur nach einem (theoretisch unendlich) langen Zeitraum, sondern auch der Verlauf derselben während der fortschreitenden Erwärmung berechnet werden kann. Aus Gründen der Übersichtlichkeit wird im Folgenden der Zeitindex "(t)" weggelassen; es ist jedoch klar, dass alle Parameter, von denen im Rahmen der Erfindung die Rede ist, unter Umständen einen zeitlich veränderlichen Verlauf aufweisen können, der somit auch durch die erfinderische Idee erfassbar bzw. berechenbar sein soll.

Für den Fall, dass die Umgebungstemperatur bekannt oder mittels einer optionalen Messeinrichtung erfasst worden ist, lässt sich nun eine zu erwartende Temperatur $T_{Est}$ der entsprechenden Komponente bestimmen.

Danach erfolgt ein Vergleich der zu erwartenden Temperaturerhöhung $\Delta T$ mit einem vorgegebenen Temperaturschwellwert $T_{Max}$.

Wird nun aufgrund der Berechnung festgestellt, dass der vorgegebene Temperaturschwellwert $T_{Max}$ der zu schützenden Komponente überschritten werden wird, so erfolgt die Trennung eines Verbrauchers vom Netz (z.B. von einem Generator) in Abhängigkeit seiner Priorität. Auf diese Weise wird sichergestellt, dass die durch die zu schützende Komponente fließende Energiemenge sich verringert und zu einer Abschwächung der durch die Verlustleistung $P_{Diss}$ hervorgerufenen Erwärmung führt. Für den Fall, dass mehrere Verbraucher abgeschaltet werden können, ist es bevorzugt, dass zunächst der eingeschaltete Verbraucher mit der niedrigsten Priorität wieder hinzugeschaltet wird, anschließend der Verbraucher mit der nächst höheren Priorität. usw.

Im umgekehrten Fall, wenn also der vorgegebene Temperaturschwellwert $T_{Max}$ der zu schützenden Komponente (wieder) unterschritten werden wird, kann eines Verbraucher ans Netz in Abhängigkeit seiner Priorität hinzugeschaltet werden. Für den Fall, dass mehrere Verbraucher abgeschaltet worden sind, ist es bevorzugt, dass zunächst der abgeschaltete Verbraucher mit der höchsten Priorität wieder hinzugeschaltet wird, anschließend der Verbraucher mit der nächst niedrigeren Priorität. usw.

Ein besonderer Vorteil des Verfahrens besteht in der Prognosefähigkeit der Temperaturentwicklung der zu schützenden Komponente. Sofern die entsprechende Leistung weiterhin abgefragt wird, kann mittels des thermischen Modells der zukünftige Verlauf der Temperatur der zu schützenden Komponente vorausberechnet werden. Auf diese Weise ist es auch möglich, die Leistung erst dann zu verringern bzw. einen oder mehrere Verbraucher dann vom Netz zu trennen, wenn das Erreichen des Temperaturschwellwerts $T_{Max}$ unmittelbar bevorsteht. Auf diese Weise kann ein unnötiges Abschalten von Verbrauchern vermieden werden, das sich nur auf die reine Leistungsermittlung an zu schützenden Komponente stützt und den zeitlichen Verlauf derselben und/oder dessen tatsächliche bzw. zu erwartende Erwärmung außer Acht lässt. Ebenso lässt das Verfahren eine Prognose des Zeitpunkts des Unterschreitens des Temperaturschwellwerts $T_{Max}$ zu, so dass auf intelligente Weise diejenigen Verbraucher ausgewählt werden können, deren Auswahl zu einer möglichst kurzen Abschaltung führt.

Erfindungsgemäß ist es dabei möglich, die Bestimmung der Verlustleistung $P_{Diss}$ mindestens einer Komponente des elektrischen Systems bevorzugterweise auf folgende Arten erfolgen zu lassen.

Nach der ersten Ausführungsform erfolgt die Bestimmung nach dem Muster:

- Messung der Eingangsleistung $P_{Ein}$ und der Ausgangsleistung $P_{Aus}$ der mindestens einen Komponente;

- Berechnen der Verlustleistung $P_{Diss}$ als Differenz der Eingangsleistung $P_{Ein}$ und Ausgangsleistung $P_{Aus}$.

Mit anderen Worten: Die mindestens eine zu schützende Komponente wird einer elektrischen Leistung ausgesetzt. Innerhalb der Komponente geht ein Teil der Leistung als Verlustleistung $P_{Diss}$ verloren und führt zu einer Erwärmung. Die Eingangs- und die Ausgangsleistung der jeweiligen Komponente wird bestimmt, und aus der Differenz ergibt sich die Verlustleistung.

Nach einer alternativen Ausführungsform erfolgt die Bestimmung nach dem Muster:

- Vorabbestimmung des Wirkungsgrades $\eta = P_{Ein}/P_{Aus}$;

- Messung der Eingangs- oder der Ausgangsleistung der mindestens einen Komponente;

- Berechnen des jeweils fehlenden Leistungswertes gemäß der Formel $P_{Ein}=\eta*P_{Aus}$ bzw. $P_{Aus}=P_{Ein}/\eta$;

- Berechnen der Verlustleistung $P_{Diss}$ als Differenz der Eingangsleistung $P_{Ein}$ und Ausgangsleistung $P_{Aus}$.

Es wird demnach nur eine der Leistungen durch Messung bestimmt. Mittels eines vorab bestimmten Wirkungsgrades $\eta$, der im Falle einer Mehrzahl von zu schützenden Komponenten auch jeweils unterschiedlich ist, kann die fehlende Leistungskomponente errechnet werden. Anschließend erfolgt wiederum die Berechnung der Verlustleistung nach obigem Schema.

Alternativ kann nach erfolgter Messung einer der Leistungen und bei bekanntem Wirkungsgrad $\eta$ die jeweils andere Leistung auch direkt nach der Formel

$$P_{Diss} = P_{Ein}*(1-\eta) \qquad\qquad\qquad (Gl.\ 2)$$

berechnet werden.

Die Bestimmung der Verlustleistung kann selbstverständlich auch auf andere, hier nicht beschriebene Verfahren nach dem bekannten und zukünftigen Stand der Technik erfolgen, ohne dass damit ein Abweichen von der grundlegenden Idee der Erfindung verbunden wäre.

Wie bereits erwähnt, erfolgt die Bestimmung der zu erwartenden Temperaturerhöhung $\Delta T$ unter Zuhilfenahme eines thermischen Modells. Dieses kann auf beliebige Weise realisiert werden; nach einer bevorzugten Ausführungsform basiert diese auf einem R-C-Glied. Ein R-C-Glied, welches aus dem Stand der Technik hinlänglich bekannt ist, stellt einen Tiefpassfilter dar. Außerdem kann das Signal beim Passieren eines R-C-Gliedes um bis zu 90 Grad phasenverschoben werden. Durch Modellieren des thermischen Verhaltens einer zu schützenden Komponente mit einem R-C-Glied erhält man somit ein Modell, welches auf langsame und lang andauernde Impulse (Leistungserhöhungen) eine verzögerte Reaktion zeigt, und auf schnelle und kurzzeitige Impulse kaum oder gar nicht reagiert. Dieses Verhalten zeigen bekanntermaßen auch durch beispielsweise elektrische Leistung erwärmte Körper.

Nach einer weiteren bevorzugten Ausführungsform des erfindungsgemäßen Verfahrens Verfahren erfolgt die Trennung bzw. Hinzuschaltung des bzw. der Verbraucher unter Berücksichtigung einer Hysteresekurve. Das bedeutet, dass die Temperaturschwelle $T_{Max}$ für ansteigende Leistungen etwas nach oben verschoben ist (obere Temperaturschwelle $T_{Max+}$), so dass die Abschaltung von Verbrauchern etwas verspätet erfolgt, und dass die Temperaturschwelle $T_{Max}$ für wieder abfallende Leistungen etwas nach unten verschoben ist (untere Temperaturschwelle $T_{Max-}$), so dass auch die Wiederanschaltung von Verbrauchern etwas verspätet erfolgt. Auf diese Weise kann das Verhalten des Energiemanagements weiter "beruhigt" werden, da die Anzahl von Umschaltvorgängen (Ein- bzw. Ausschalten von Verbrauchern) dadurch sinkt. Wäre beispielsweise der Zustand des Systems sehr nah an einem kritischen Wert, so würde schon eine kleine Änderung zu einem Ansprechen des Energiemanagementsystems führen, welches sofort nach dem Ansprechen durch das System wieder aufgehoben werden würde, um danach erneut ausgelöst zu werden usw. Dieses "grenzzyklenhafte" Verhalten ist somit weitgehend vermeidbar.

Für die Bestimmung der Priorität des bzw. der Verbraucher können unterschiedliche Kriterien herangezogen werden. Nach einer ersten bevorzugten Ausführungsform orientiert sich die Priorität eines Verbrauchers an seiner Sicherheitsrelevanz. Das bedeutet, dass weniger sicherheitsrelevante Verbraucher (z.B. ein Autoradio in einem Kfz) eine geringere Priorität erhalten als sicherheitsrelevante wie z.B. das Bremssystem oder der Scheinwerfer. Nach einer zweiten Ausführungsform orientiert sich die Priorität eines Verbrauchers an seiner Leistungsaufnahme. Leistungsarme Verbraucher erzielen einen weniger starken Effekt durch ihre Abschaltung, so dass diese mit hoher Priorität versehen werden und dementsprechend selten geschaltet werden können, wohingegen leistungsstarke Verbraucher eine geringe Priorität erhalten und dementsprechend schnell abgeschaltet werden, wenn das Energiemanagementsystem einen Schutz der zu schützenden Komponente herbeiführen muss.

Nach einer bevorzugten Ausführungsform des erfindungsgemäßen Verfahrens wird zusätzlich zu den oben genannten Leistungen auch die Umgebungstemperatur $T_L$ überwacht. Diese Temperatur kann dann in die Berechnung mittels des thermischen Modells einfließen, da bekanntermaßen die Erwärmung auch von der Umgebungstemperatur bzw. dem Temperaturgradienten zwischen Körper und Umgebung abhängt. Außerdem kann so durch Addition der berechneten Temperaturerhöhung $\Delta T$ mit der Umgebungstemperatur $T_L$ der Temperaturschwellwert $T_{Max}$ errechnet werden. Dieser gibt die Absoluttemperatur des zu schützenden Bauteils an, die mittels des thermischen Modells zu verschiedenen Zeitpunkten jeweils zu erwarten ist.

Die Erfindung offenbart auch eine Vorrichtung zum optimierten Energiemanagement eines elektrischen Systems. Diese Vorrichtung dient der besonders vorteilhaften Durchführung des erfindungsgemäßen Verfahrens. Die Vorrichtung umfasst dazu die folgenden Komponenten:

- mindestens eine Leistungsmesseinrichtung zur Messung einer Eingangsleistung $P_{Ein}$ und/oder einer Ausgangsleistung $P_{Aus}$,

- eine Berechnungseinrichtung zur Berechnung der Verlustleistung $P_{Diss}$ und einer zu erwartenden Temperaturerhöhung $\Delta T$ bzw. einer zu erwartenden (geschätzten) Endtemperatur $T_{Est}$, sowie zum Vergleich der zu erwartenden bzw. mittels der Berechnung geschätzten Endtemperatur $T_{Est}$ mit einem Temperaturschwellwert $T_{Max}$,

- eine Speichereinrichtung zum Speichern der Prioritäten von Verbrauchern sowie ggf. von Wirkungsgrad(en) einer oder mehrerer zu schützender Komponenten,

- eine Schalteinrichtung zum Schalten von Verbrauchern.

Die Leistungsmesseinrichtung kann dabei auf beliebige Art und Weise, direkt oder indirekt messend aufgebaut sein. Definitionsgemäß kann mit der Leistungsmesseinrichtung eine Leistung gemessen werden, und sofern die Einrichtung mehrere Eingänge wie z.B. Messfühler oder -sonden aufweist, können auch mehrere Leistungen aufgenommen werden. Bevorzugt weist die Leistungsmesseinrichtung eine oder zwei Messpunkte auf. Durch einen entsprechenden Umschalter (Multiplexer) kann mittels einer einkanaligen Leistungsmesseinrichtung auch eine Vielzahl unterschiedlicher Messpunkte bedient werden, indem schnell von einem zum nächsten, und nach dem letzten wieder zum ersten Messpunkt umgeschaltet und die entsprechenden Messwerte jeweils abgespeichert oder sofort weiterverarbeitet werden.

Die Berechnungseinrichtung kann auf beliebige Art und Weise aufgebaut sein. Insbesondere kommen hier sowohl Rechner auf Mikrocomputer-Basis als auch analoge Schaltungen in Frage. Letztere bieten neben dem geringen Preis auch den Vorteil einer hohen Verarbeitungsgeschwindigkeit, sind dafür aber weniger leicht an unterschiedliche Aufgaben anpassbar. Durch die Berechnungseinrichtung wird die Verlustleistung $P_{Diss}$ berechnet, und sie enthält bevorzugt auch das thermische Modell zur Berechnung der Temperaturerhöhung $\Delta T$. Sofern die Umgebungstemperatur

$T_L$ bekannt oder vorgegeben ist, kann auch die Endtemperatur $T_{Est}$ berechnet werden. Schließlich kann die Berechnungseinrichtung bevorzugt auch Vergleichsoperationen ausführen, so dass mittels Vergleichs des Berechnungsergebnisses mit dem vorgegebenen Temperaturschwellwert $T_{Max}$ entschieden werden kann, ob und ggf. welcher Verbraucher abzuschalten ist.

Hierzu umfasst die erfindungsgemäße Vorrichtung eine Speichereinrichtung zum Speichern der Prioritäten von Verbrauchern sowie ggf. von Wirkungsgrad(en) einer oder mehrerer zu schützender Komponenten sowie nötigenfalls weiterer Parameter.

Die ebenfalls von der Vorrichtung umfasste Schalteinrichtung dient dem Abschalten von Verbrauchern, um auf diese Weise den Schutz der zu schützenden Komponente herbeizuführen bzw., sofern dieser Schutz nicht mehr nötig ist, den oder die Verbraucher wieder anzuschalten. Hierzu kommen beispielsweise sowohl elektromechanische Bauelemente wie z.B. Relais als auch elektronische Bauelemente wir Phasenanschnittssteuerungen, Thyristoren und dergleichen zum Einsatz.

Dem elektrischen System, mit welchem die erfindungsgemäße Vorrichtung zusammenwirkt und welches die zu schützende(n) Komponente(n) enthält, ist die erfindungsgemäße Vorrichtung lediglich zugeordnet. Alternativ kann die erfindungsgemäße Vorrichtung das elektrische System auch umfassen. Ebenso können weitere Komponenten wie mindestens eine Energiequelle, und/oder der mindestens eine Verbraucher dem elektrischen System angehören oder alternativ von der erfindungsgemäßen Vorrichtung umfasst sein. Mit anderen Worten: Die erfindungsgemäße Vorrichtung kann als einzelnes Gerät vorgesehen sein und einem schon bestehenden elektrischen System als Ergänzung dienen, oder das elektrische System beinhaltet die erfindungsgemäße Vorrichtung in allen ihren wesentlichen Komponenten.

Erfindungsgemäß kann die mindestens eine zu schützende Komponente ein Transferglied für elektrische Energie sein. Besonders bevorzugt ist dieses Transferglied eine elektrische Leitung, welche sich bei Leistungsdurchfluss erwärmt, wobei eine Übererwärmung mittels der erfindungsgemäßen Vorrichtung in kontrollierter Weise zu vermeiden ist. Alternativ kann die zu schützende Komponente en Verbraucher sein, oder auch ein Generator, wie z.B. die bzw. eine Energiequelle des elektrischen Systems. Auch Kombinationen der verschiedenen Typen von zu schützenden Komponenten sind selbstverständlich möglich. Erfindungsgemäß benötigt jede einzelne zu schützende Komponente einen oder zwei Messpunkte, anhand derer die Eingangs- und/oder die Ausgangsleistung $P_{Ein}$ bzw. $P_{Aus}$ bestimmt werden kann. Sofern nur einer der Leistungswerte gemessen wird, ist zur Berechnung des fehlenden Leistungswertes der Wirkungsgrad $\eta$ im Voraus zu bestimmen und für die Berechnung vorzuhalten.

Es ist dabei besonders bevorzugt, dass die erfindungsgemäße Vorrichtung eine Mehrzahl von Leistungsmesseinrichtungen und eine Berechnungseinrichtung umfasst. Mit einer Mehrzahl von Leistungsmesseinrichtungen ist gemeint, dass insbesondere eine Mehrzahl von Messpunkten für die Mehrzahl der zu schützenden Komponenten bereitzuhalten ist, wobei die eigentliche Messelektronik nur einmal vorhanden sein muss und beispielsweise mittels eines Multiplexers mit den Messpunkten umschaltbar verbunden ist. Bei Anliegen der Messdaten jeweils einer zu schützenden Komponente wird mittels der einen Berechnungseinrichtung unter bevorzugter Nutzung des erfindungsgemäßen Verfahrens die zu erwartende Temperaturerhöhung $\Delta T$ bzw. einer zu erwartenden Endtemperatur $T_{Est}$ bestimmt und anschließend entschieden, ob und ggf. welcher der Verbraucher ab- oder anzuschalten ist. Erfindungsgemäß ist es ebenfalls bevorzugt, zunächst die Leistungsdaten mehrerer oder aller zu schützenden Komponenten zu bestimmen, und anschließend eine Entscheidung zu treffen, die mit möglichst wenigen An- und/oder Abschaltungen zu dem gewünschten Ergebnis führt.

Die offenbarte Erfindung, die ein Verfahren und eine Vorrichtung bereitstellt, überwindet in der beschriebenen Weise die Nachteile des Standes der Technik. Insbesondere ist der jeweilige, an das konkrete Gesamtsystem angepasste Entwurf einfacher als der Entwurf der im Stand der Technik benutzten Zustandsautomaten. Auf kurzzeitige Überschreitungen der Leistungsobergrenze reagiert die erfindungsgemäße Vorrichtung nur dann mit einem Abschalten der priorisierten Verbraucher, wenn auch tatsächlich mit einer unzulässigen Temperaturerhöhung zu rechnen ist. Das erfindungsgemäße Verfahren ist auch selbststabilisierend, so dass das Auftreten von Grenzzyklen weitgehend vermieden wird. Schließlich bietet das erfindungsgemäße Verfahren die Möglichkeit einer genauen Begrenzung der Temperatur der zu schützenden Komponente.

Die einzige Figur zeigt schematisch eine bevorzugte Ausführungsform der erfindungsgemäßen Vorrichtung.

Diese umfasst zunächst eine Leistungsmesseinrichtung 1. Die Leistungsmesseinrichtung 1 ist in der dargestellten Ausführungsform mit zwei Messpunkten 2A und 2B verbunden. Diese wiederum sind mit einer zu schützenden Komponente 3 in Kontakt und dienen der Aufnahme der zu messenden zeitabhängigen Leistungen $P_{Ein}$ bzw. $P_{Aus}$, welche mittels entsprechender Leitungen und in Form von Messdaten an eine Berechnungseinrichtung 4 weitergegeben werden, die auch eine nicht gesondert dargestellte Speichereinrichtung 4' umfasst.

In der gezeigten Ausführungsform ist außerdem noch ein Messpunkt 2C vorhanden, mit welchem die (zeitabhängige) Umgebungstemperatur $T_L$ der zu schützenden Komponente 3 an die Berechnungseinrichtung 4 übergeben wird (gestrichelte Linie).

Die Berechnungseinrichtung 4 enthält das thermische Modell, welches als R-C-Glied dargestellt ist, das aus einem Widerstand R und einem Kondensator C besteht. Am rechts neben dem R-C-Glied dargestellten Ausgang des thermischen Modells steht die geschätzte (berechnete) Endtemperatur $T_{Est}$ zur Verfügung. Es ist klar, dass je nach genauer Ausgestaltung der Vorrichtung auch zeitabhängige Variable wie z.B. eine zeitabhängige Leistung, oder Temperatur, mit der dargestellten Ausführungsform handhabbar sind.

Die Information der Endtemperatur (Berechnungsergebnis) wird in einen weiteres Bauteil der Berechnungseinrichtung überführt. Dieses entscheidet aufgrund der geschätzte Endtemperatur $T_{Est}$, ob ein Schaltzustand S="ein" oder S="aus" herbeigeführt werden soll. Für den Fall, dass $T_{Est}$ über eine obere Temperaturschwelle $T_{Max+}$ steigt (senkrechter, nach oben weisender Pfeil) springt der Schaltzustand S auf "ein" (obere Hälfte des Diagramms). Für den Fall, dass $T_{Est}$ unter eine untere Temperaturschwelle $T_{Max-}$ fällt (senkrechter, nach unten weisender Pfeil) springt der Schaltzustand S auf "aus" (untere Hälfte des Diagramms). Je nach horizontalem Abstand der beiden senkrechten Pfeile im Diagramm und somit von $T_{Max+}$ zu $T_{Max-}$ ist das Änderungsverhalten des Schaltzustands ruhiger (größerer Abstand) oder agiler (kleinerer Abstand).

Die Berechnungseinheit 4 kann nun mittels einer symbolisch gezeigten Steuerleitung 5 die Verbraucher 6A, 6B, ... schalten. Hierzu ist, ebenfalls symbolisch dargestellt, entsprechende Schalteinrichtung 7 vorhanden. Es ist klar, dass die Steuerleitung 5 so ausgestaltet ist, dass mit ihr eine Auswahl eines oder mehrerer Verbraucher 6A, 6B, ... möglich ist, so dass nicht alle Verbraucher gleichzeitig von einer Energiequelle 8 wie z.B. einem Generator, mit der bzw. dem sie elektrisch verbunden sind, getrennt werden.

## Bezugszeichenliste und Abkürzungen

| | |
|---|---|
| 1 | Leistungsmesseinrichtung |
| 2A,2B,2C | Messpunkt |
| 3 | zu schützende Komponente |
| 4 | Berechnungseinrichtung |
| 4' | Speichereinrichtung |
| 5 | Steuerleitung |
| 6,6A,6B,... | Verbraucher |
| 7 | Schalteinrichtung |
| 8 | Energiequelle |
| $\eta$ | Wirkungsgrad |
| $P_{Ein}$ | Eingangsleistung |
| $P_{Aus}$ | Ausgangsleistung |
| $P_{Diss}$ | Verlustleistung |
| R | Widerstand |
| C | Kondensator |
| $T_L$ | Umgebungstemperatur |
| $T_{Max}$ | Temperaturschwellwert |
| $T_{Max+}$ | obere Temperaturschwelle |
| $T_{Max-}$ | untere Temperaturschwelle |
| S | Schaltzustand |

## Patentansprüche

1. Verfahren zum optimierten Energiemanagement eines elektrischen Systems, umfassend folgende Schritte:

   - Bestimmung der Verlustleistung $P_{Diss}$ mindestens einer zu schützenden Komponente (3) des elektrischen Systems;
   - Eingabe der Verlustleistung $P_{Diss}$ in ein thermisches Modell der jeweiligen zu schützenden Komponente (3);
   - Berechnung der zu erwartenden Temperaturerhöhung $\Delta T$ der jeweiligen zu schützenden Komponente;
   - Vergleich der zu erwartenden Temperaturerhöhung $\Delta T$ mit einem vorgegebenen Temperaturschwellwert $T_{Max}$;
   - Trennung eines Verbrauchers (6) vom Netz in Abhängigkeit seiner Priorität, wenn ein vorgegebener Temperaturschwellwert $T_{Max}$ bei Berücksichtigung der zu erwartenden Temperaturerhöhung $\Delta T$ überschritten werden wird;
   - Hinzuschalten eines Verbrauchers (6) ans Netz in Abhängigkeit seiner Priorität, wenn ein vorgegebener Temperaturschwellwert $T_{Max}$ bei Berücksichtigung der zu erwartenden Temperaturerhöhung $\Delta T$ unterschritten werden wird.

**2.** Verfahren nach Anspruch 1, wobei die Bestimmung der Verlustleistung $P_{Diss}$ mindestens einer zu schützenden Komponente (3) des elektrischen Systems erfolgt, indem die folgenden Schritte durchgeführt werden:

- Messung der Eingangsleistung $P_{Ein}$ und der Ausgangsleistung $P_{Aus}$ der mindestens einen zu schützenden Komponente (3);
- Berechnen der Verlustleistung $P_{Diss}$ als Differenz der Eingangsleistung $P_{Ein}$ und Ausgangsleistung $P_{Aus}$.

**3.** Verfahren nach Anspruch 1, wobei die Bestimmung der Verlustleistung $P_{Diss}$ mindestens einer zu schützenden Komponente (3) des elektrischen Systems erfolgt, indem die folgenden Schritte durchgeführt werden:

- Vorabbestimmung des Wirkungsgrades $\eta = P_{Ein}/P_{Aus}$;
- Messung der Eingangs- oder der Ausgangsleistung der mindestens einen zu schützenden Komponente (3)
- Berechnen des jeweils fehlenden Leistungswertes gemäß der Formel $P_{Ein} = \eta * P_{Aus}$ bzw. $P_{Aus} = P_{Ein}/\eta$;
- Berechnen der Verlustleistung $P_{Diss}$ als Differenz der Eingangsleistung $P_{Ein}$ und Ausgangsleistung $P_{Aus}$.

**4.** Verfahren nach einem der vorangehenden Ansprüche, wobei das thermische Modell auf einem R-C-Glied basiert.

**5.** Verfahren nach einem der vorangehenden Ansprüche, wobei die Trennung bzw. Hinzuschaltung des bzw. der Verbraucher (6, 6A, 6B, ...) unter Berücksichtigung der Hysteresekurve erfolgt.

**6.** Verfahren nach einem der vorangehenden Ansprüche, wobei sich die Priorität eines Verbrauchers (6, 6A, 6B, ...) an seiner Sicherheitsrelevanz orientiert.

**7.** Verfahren nach einem der Ansprüche 1 bis 5, wobei sich dir Priorität eines Verbrauchers (6, 6A, 6B, ...) an seiner Leistungsaufnahme orientiert.

**8.** Verfahren nach einem der vorangehenden Ansprüche, wobei zusätzlich die Umgebungstemperatur $T_L$ überwacht wird.

**9.** Vorrichtung zum optimierten Energiemanagement eines elektrischen Systems, das die folgenden Komponenten umfasst:

- mindestens eine Energiequelle (8),
- mindestens einen Verbraucher (6),
- mindestens eine zu schützende Komponente (3),

wobei die Vorrichtung die folgenden Komponenten umfasst:

- mindestens eine Leistungsmesseinrichtung (1) zur Messung einer Eingangsleistung $P_{Ein}$ und/oder einer Ausgangsleistung $P_{Aus}$ der zu schützenden Komponente,
- eine Berechnungseinrichtung (4) zur Berechnung der Verlustleistung $P_{Diss}$ der zu schützenden Komponente und einer zu erwartenden Temperaturerhöhung $\Delta T$ bzw. einer zu erwartenden Endtemperatur $T_{Est}$ der zu schützenden Komponente, sowie zum Vergleich der zu erwartenden Endtemperatur $T_{Est}$ mit einem Temperaturschwellwert $T_{Max}$,
- eine Speichereinrichtung (4') zum Speichern der Prioritäten von Verbrauchern (6A, 6B, ...) sowie ggf. von Wirkungsgrad(en) einer oder mehrerer zu schützender Komponenten,
- eine Schalteinrichtung (7) zum Schalten der Verbraucher (6A, 6B, ...) in Abhängigkeit ihrer Prioritäten und des Vergleichs der zu erwartenden Endtemperatur $T_{Est}$ der zu schützenden Komponente mit dem Temperaturschwellwert $T_{Max}$.

**10.** Vorrichtung nach Anspruch 9, wobei die mindestens eine zu schützende Komponente (3) ein Transferglied für elektrische Energie ist.

**11.** Vorrichtung nach Anspruch 9, wobei die mindestens eine zu schützende Komponente (3) ein Verbraucher (6) ist.

**12.** Vorrichtung nach Anspruch 9, wobei die mindestens eine zu schützende Komponente (3) eine Energiequelle (8) ist.

**13.** Vorrichtung nach einem der Ansprüche 8 bis 12, wobei die Vorrichtung eine Mehrzahl von Leistungsmesseinrichtungen (1) und eine Berechnungseinrichtung (4) umfasst.

14. Vorrichtung nach einem der Ansprüche 8 bis 13, wobei die Vorrichtung ferner eine Temperaturmesseinrichtung zur Messung der Umgebungstemperatur $T_L$ umfasst.

15. Verwendung eines Verfahrens und/oder einer Vorrichtung nach einem der vorgenannten Ansprüche in einem Luft- oder Raumfahrzeug.

**Claims**

1. Method for optimized energy management of an electrical system, comprising the following steps:

    - determining the power dissipation $P_{Diss}$ of at least one component (3) to be protected of the electrical system;
    - inputting the power dissipation $P_{Diss}$ into a thermal model of the respective component (3) to be protected;
    - calculating the temperature increase $\Delta T$ to be expected of the respective component to be protected;
    - comparing the temperature increase $\Delta T$ to be expected with a predefined temperature threshold value $T_{Max}$;
    - disconnecting a consumer (6) from the mains depending on its priority when a predefined temperature threshold value $T_{Max}$ is exceeded under consideration of the temperature increase $\Delta T$ to be expected;
    - connecting-in a consumer (6) to the mains depending on its priority when the temperature falls below a predefined temperature threshold value $T_{Max}$ under consideration of the temperature increase $\Delta T$ to be expected.

2. Method as claimed in claim 1, wherein the determination of the power dissipation $P_{Diss}$ of at least one component (3) to be protected of the electrical system takes place in that the following steps are carried out:

    - measuring an input power $P_{Ein}$ and output power $P_{Aus}$ of the at least one component (3) to be protected;
    - calculating the power dissipation $P_{Diss}$ as the difference between the input power $P_{Ein}$ and output power $P_{Aus}$.

3. Method as claimed in claim 1, wherein the determination of the power dissipation $P_{Diss}$ of at least one component (3) to be protected of the electrical system takes place in that the following steps are carried out:

    - pre-determining the degree of efficiency $\eta = P_{Ein}/P_{Aus}$;
    - measuring the input power or output power of the at least one component (3) to be protected;
    - calculating the respectively missing power value according to the formula $P_{Ein} = \eta * P_{Aus}$ or $P_{Aus} = P_{Ein}/\eta$;
    - calculating the power dissipation $P_{Diss}$ as the difference between the input power $P_{Ein}$ and output power $P_{Aus}$.

4. Method as claimed in any one of the preceding claims, wherein the thermal model is based on an RC element.

5. Method as claimed in any one of the preceding claims, wherein disconnecting or connecting-in the consumer(s) (6, 6A, 6B, ...) takes place under consideration of the hysteresis curve.

6. Method as claimed in any one of the preceding claims, wherein the priority of a consumer (6, 6A, 6B, ...) is oriented towards the safety relevance thereof.

7. Method as claimed in any one of claims 1 to 5, wherein the priority of a consumer (6, 6A, 6B, ...) is oriented towards the power consumption thereof.

8. Method as claimed in any one of the preceding claims, wherein ambient temperature $T_L$ is additionally monitored.

9. Device for optimized energy management of an electrical system, the system comprising the following components:

    - at least one power source (8),
    - at least one consumer (6),
    - at least one component (3) to be protected,

    the device comprising the following components:

    - at least one power measuring unit (1) for measuring an input power $P_{Ein}$ and/or an output power $P_{Aus}$ of the component to be protected,
- a calculation unit (4) for calculating the power dissipation $P_{Diss}$ of the component to be protected and a temperature increase $\Delta T$ to be expected or an end temperature $T_{Est}$ to be expected of the component to be protected, and for comparing the end temperature $T_{Est}$ to be expected with a temperature threshold value $T_{Max}$,
- a storage unit (4') for storing priorities of consumers (6A, 6B, ...) and possibly a degree (s) of efficiency of one or more components to be protected,
- -a switching unit (7) for switching the consumers (6A, 6B, ...) in dependence upon the priorities thereof and the comparison of the end temperature $T_{Est}$ to be expected of the component to be protected with the temperature threshold value $T_{Max}$.

10. Device as claimed in claim 9, wherein the at least one component (3) to be protected is a transfer element for electrical energy.

11. Device as claimed in claim 9, wherein the at least one component (3) to be protected is a consumer (6).

12. Device as claimed in claim 9, wherein the at least one component (3) to be protected is an energy source (8).

13. Device as claimed in any one of claims 8 to 12, wherein the device comprises a plurality of power measuring units (1) and a calculation unit (4).

14. Device as claimed in any one of claims 8 to 13, wherein the device further comprises a temperature measuring unit for measuring the ambient temperature $T_L$.

15. Use of a method and/or of a device as claimed in any one of the preceding claims in an aircraft or spacecraft.

**Revendications**

1. Procédé pour optimiser la gestion de l'énergie d'un système électrique, comprenant les étapes suivantes :

    - détermination de la puissance dissipée $P_{Diss}$ d'au moins un composant à protéger (3) du système électrique ;
    - saisie de la puissance dissipée $P_{Diss}$ dans un modèle thermique du composant à protéger (3) respectif ;
    - calcul de la hausse de température $\Delta T$ à prévoir du composant à protéger respectif ;
    - comparaison de la hausse de température $\Delta T$ à prévoir avec une valeur seuil de température $T_{Max}$ prédéfinie ;
    - séparation d'un consommateur (6) d'avec le réseau en fonction de sa priorité, lorsqu'une valeur seuil de température $T_{Max}$ prédéfinie va être dépassée en tenant compte de la hausse de température $\Delta T$ à prévoir ;
    - connexion d'un consommateur (6) au réseau en fonction de sa priorité, lorsqu'une valeur seuil de température $T_{Max}$ prédéfinie ne sera pas atteinte en tenant compte de la hausse de température $\Delta T$ à prévoir.

2. Procédé selon la revendication 1, dans lequel la détermination de la puissance dissipée $P_{Diss}$ d'au moins un composant à protéger (3) du système électrique s'effectue en exécutant les étapes suivantes :

    - mesure de la puissance d'entrée $P_{Ein}$ et de la puissance de sortie $P_{Aus}$ de l'au moins un composant à protéger (3) ;
    - calcul de la puissance dissipée $P_{Diss}$ comme différence entre la puissance d'entrée $P_{Ein}$ et la puissance de sortie $P_{Aus}$.

3. Procédé selon la revendication 1, dans lequel la détermination de la puissance dissipée $P_{Diss}$ d'au moins un composant à protéger (3) du système électrique s'effectue en exécutant les étapes suivantes :

    - détermination préalable du rendement $\eta = P_{Ein}/P_{Aus}$ :
    - mesure de la puissance d'entrée ou de la puissance de sortie de l'au moins un composant à protéger (3)
    - calcul de la valeur de puissance respectivement manquante selon la formule $P_{Ein}=\eta*P_{Aus}$ ou $P_{Aus}-P_{Ein}/\eta$ ;
    - calcul de la puissance dissipée $P_{Diss}$ comme différence entre la puissance d'entrée $P_{Ein}$ et la puissance de sortie $P_{Aus}$.

4. Procédé selon l'une des revendications précédentes, dans lequel le modèle thermique est basé sur un circuit RC.

**5.** Procédé selon l'une des revendications précédentes, dans lequel la séparation ou la connexion du ou des consommateurs (6, 6A, 6B, ...) s'effectue en tenant compte de la courbe d'hystérésis.

**6.** Procédé selon l'une des revendications précédentes, dans lequel la priorité d'un consommateur (6, 6A, 6B, ...) est fondée sur son importance du point de vue de la sécurité.

**7.** Procédé selon l'une des revendications 1 à 5, dans lequel la priorité d'un consommateur (6, 6A, 6B, ...) est fondée sur sa puissance absorbée.

**8.** Procédé selon l'une des revendications précédentes, dans lequel la température ambiante $T_L$ est surveillée en plus.

**9.** Dispositif pour optimiser la gestion de l'énergie d'un système électrique, qui comprend les composants suivants :

- au moins une source d'énergie (8),
- au moins un consommateur (6),
- au moins un composant à protéger (3),

dans lequel le dispositif comprend les composants suivants :

- au moins un moyen de mesure de puissance (1) destiné à la mesure d'une puissance d'entrée $P_{Ein}$ et/ou d'une puissance de sortie $P_{Aus}$ du composant à protéger,
- un moyen de calcul (4) pour calculer la puissance dissipée $P_{Diss}$ du composant à protéger et une hausse de température $\Delta T$ à prévoir ou une température finale $T_{Est}$ à prévoir du composant à protéger, ainsi que pour comparer la température finale $T_{Est}$ à prévoir avec une valeur seuil de température $T_{Max}$,
- un moyen de stockage (4') pour stocker les priorités de consommateurs (6A, 6B, ...) ainsi que le cas échéant le(s) rendement(s) d'un ou de plusieurs composants à protéger,
- un moyen de connexion (7) pour connecter les consommateurs (6A, 6B, ...) en fonction de leur priorité et de la comparaison de la température finale $T_{Est}$ à prévoir du composant à protéger avec la valeur seuil de température $T_{Max}$.

**10.** Dispositif selon la revendication 9, dans lequel l'au moins un composant à protéger (3) est un organe de transfert pour énergie électrique.

**11.** Dispositif selon la revendication 9, dans lequel l'au moins un composant à protéger (3) est un consommateur (6) .

**12.** Dispositif selon la revendication 9, dans lequel l'au moins un composant à protéger (3) est une source d'énergie (8) .

**13.** Dispositif selon l'une des revendications 8 à 12, dans lequel le dispositif comprend une pluralité de moyens de mesure de puissance (1) et un moyen de calcul (4).

**14.** Dispositif selon l'une des revendications 8 à 13, dans lequel le dispositif comprend en outre un moyen de mesure de température pour mesurer la température ambiante $T_L$.

**15.** Utilisation d'un procédé et/ou d'un dispositif selon l'une des revendications précédentes dans un aéronef ou un véhicule spatial.

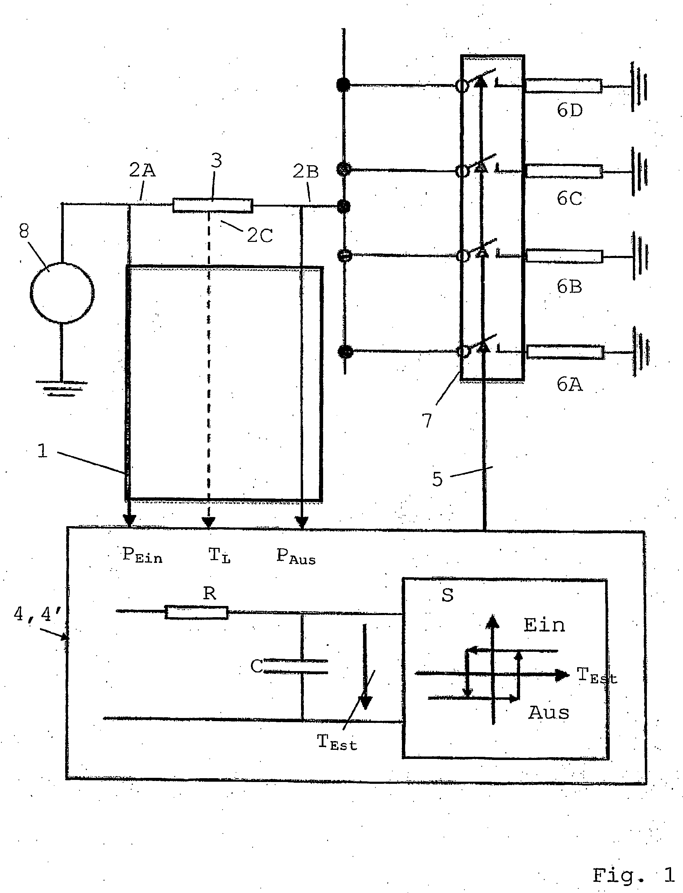

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10341904 B4
- DE 10058404 A1
- DE 19842429 A1